# EUROPÄISCHE PATENTSCHRIFT

(11) **EP 1 561 145 B1**
(45) Veröffentlichungstag und Bekanntmachung des Hinweises auf die Patenterteilung: **28.06.2006**
(21) Anmeldenummer: 03789019.1
(22) Anmeldetag: 08.11.2003
(51) Int. Cl.: G02B 26/10, B23K 26/08

(54) **VORRICHTUNG ZUR ABLENKUNG EINES LASERSTRAHLS**
DEVICE FOR DEFLECTING A LASER BEAM
DISPOSITIF PERMETTANT DE D VIER UN FAISCEAU LASER

(30) Priorität: 12.11.2002 DE 10252443
(43) Veröffentlichungstag der Anmeldung: 10.08.2005
(73) Patentinhaber: TRUMPF LASERTECHNIK GmbH, D-71254 Ditzingen (DE)
(72) Erfinder: ANDREASCH, Wolfgang, 71384 Weinstadt (DE); HÄCKER, Michael, 71299 Wimsheim (DE)
(74) Vertreter: Rank, Christoph
(86) Internationale Anmeldenummer: PCT/EP2003/012488
(87) Internationale Veröffentlichungsnummer: WO 2004/044640

(56) Entgegenhaltungen:
- EP-A- 0 179 275
- US-A- 6 057 915

## Beschreibung

Die Erfindung betrifft eine Vorrichtung gemäß dem Oberbegriff des Anspruchs 1 bzw. 2. Eine solche Vorrichtung ist aus der US-A-6057915 bekannt, die als nächstliegender Stand der Technik gesehen wird.

Eine andere Ablenkvorrichtung ist beispielsweise durch die EP 0 179 275 A1 bekannt geworden.

Diese bekannte Vorrichtung dient zum zweidimensionalen Ablenken eines auf den Ablenkspiegel auftreffenden Laserstrahls. Dazu lässt sich der Ablenkspiegel um zwei zueinander rechtwinklige Schwenkachsen verkippen, deren Schnittpunkt in der Spiegelfläche liegt und daher einen Drehfixpunkt bildet. Der Ablenkspiegel ist schwenkbar um die eine, erste Schwenkachse in einem Rahmen gelagert, der um die andere, zweite Schwenkachse gelagert ist und mittels einer Antriebsspindel gedreht wird. Mittels eines Dreharms, in dessen Schlitz ein rückseitig am Ablenkspiegel befestigter Mitnehmer eingreift, wird die Drehbewegung einer weiteren Antriebsspindel in ein Verschwenken des Ablenkspiegels um die erste Schwenkachse umgelenkt. Durch Verschwenken des Ablenkspiegels um die erste Schwenkachse und des Rahmens um die zweite Schwenkachse lässt sich der Ablenkspiegel allseitig bezüglich des Drehfixpunkts verkippen.

Es ist die Aufgabe der Erfindung, bei einer Ablenkvorrichtung der eingangs genannten Art einen anderen Antrieb zum Verschwenken des Ablenkspiegels um die erste Schwenkachse bereitzustellen.

Diese Aufgabe wird erfindungsgemäß dadurch gelöst, dass die Einrichtung ein drehbar um die zweite Schwenkachse gelagertes Verbindungselement, einen Hebel, der am Ablenkspiegel und am Verbindungselement um jeweils parallel zur ersten Schwenkachse verlaufende Achsen schwenkbar gelagert ist, und ein längs der zweiten Schwenkachse verschiebbares Antriebselement aufweist, wobei die Halterung und das Verbindungselement längs der zweiten Schwenkachse relativ zueinander verschiebbar gelagert sind und das Antriebselement mit der Halterung oder dem Verbindungselement bewegungsgekoppelt ist.

Bei einer bevorzugten Ausführungsform der Erfindung ist die Halterung mit dem Antriebselement verbunden und das Verbindungselement unverschiebbar gelagert. Bei Anordnung der Halterung zwischen Ablenkspiegel und Verbindungselement erstreckt sich das Antriebselement vorzugsweise durch eine Öffnung des Verbindungselements hindurch bis zur Halterung. Das Antriebselement ist beispielsweise mit einem Dreh-Schub-Antrieb zum Verschwenken und Verschieben der Halterung verbunden, wobei der Dreh-Schub-Antrieb als Kombination eines tubularen Linearmotors mit einem Torque-Motor ausgebildet sein kann. Bei dem Torque-Motor sind die Primär- und Sekundärteile unterschiedlich lang ausgebildet.

Bei einer anderen bevorzugten Ausführungsform der Erfindung ist das Verbindungselement mit dem Antriebselement verbunden und die Halterung unverschiebbar gelagert. Bei Anordnung des Verbindungselements zwischen Ablenkspiegel und Halterung erstreckt sich das Antriebselement vorzugsweise durch eine Öffnung der Halterung bis zum Verbindungselement, das in vorteilhafter Weiterbildung auf dem Antriebselement drehbar, aber axial unverschiebbar gelagert ist. Das Antriebselement ist beispielsweise mit einem Linearantrieb zum Verschieben des Verbindungselements verbunden. Die Halterung ist beispielsweise mit einem Drehantrieb verbunden. In einer weiteren Variante sind das Verbindungselement und das Antriebselement miteinander starr gekoppelt, wobei das Antriebselement relativ zum Abtrieb eines Linearantriebs drehbar, aber axial unverschiebbar ist.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung. Es zeigt:
- Fig. 1: ein erstes Ausführungsbeispiel der erfindungsgemäßen Ablenkvorrichtung; und
- Fig. 2: ein zweites Ausführungsbeispiel der erfindungsgemäßen Ablenkvorrichtung in einer Darstellung analog zu Fig. 1.

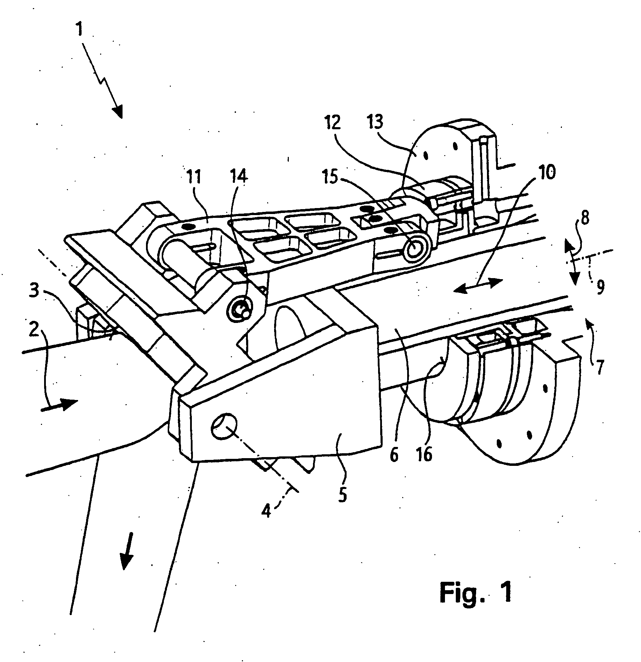

Die in **Fig. 1** gezeigte Vorrichtung **1** dient zur Ablenkung eines Laserstrahls **2** mittels eines Ablenkspiegels **3,** der um eine erste Schwenkachse **4** in einer gabelförmigen Halterung **5** drehbar gelagert ist. Die Halterung 5 ist an dem Antriebselement **6** eines Dreh-Schub-Antriebs **7** befestigt, das gleichzeitig oder separat eine Rotationsbewegung (Doppelpfeil **8)** um eine rechtwinklig zur ersten Schwenkachse 4 verlaufende, zweite Schwenkachse **9** und eine Translationsbewegung (Doppelpfeil **10)** ausführen kann. Diese zweite Schwenkachse 9 verläuft kollinear zur optischen Achse des auf die Ablenkvorrichtung 1 einfallenden Laserstrahls 2. Der Ablenkspiegel 3 ist über einen Hebel **11** gelenkig mit einem ringförmigen Verbindungselement **12** verbunden, das axial unverschiebbar an einem Gehäuseflansch **13** des Dreh-Schub-Antriebs 7 um die zweite Schwenkachse 9 drehbar gelagert ist. Der Hebel 11 ist rückseitig am Ablenkspiegel 3 und am Verbindungselement 12 um jeweils parallel zur ersten Schwenkachse 4 verlaufende Achsen **14, 15** drehbar gelagert. Das Antriebselement 6 erstreckt sich durch die Ringöffnung **16** des Verbindungselements 12 hindurch bis zur Halterung 5, die zwischen Ablenkspiegel 3 und Verbindungselement.12 angeordnet ist.

Vorteilhaft kann zwischen Antriebselement 6 und Verbindungselement 12 noch eine Drehkopplung vorgesehen sein, die in Fig. 1 aber nicht gezeigt ist.

Durch Verdrehen des Antriebselements 6 werden die Halterung 5 und damit auch der Ablenkspiegel 3 um die zweite Schwenkachse 9 geschwenkt. Eine Schubbewegung des Antriebselements 6 längs der zweiten Schwenkachse 9 bewirkt eine Verschiebung der Halterung 5 gegenüber dem Verbindungselement 12. Da das Verbindungselement 12 unverschiebbar gelagert ist, wird der Ablenkspiegel 3 um die erste Schwenkachse 4 geschwenkt. Durch gleichzeitiges Verschwenken und Verschieben der Halterung 5 mittels des Antriebselements 6 lässt sich der Ablenkspiegel 3 um beide Schwenkachsen 4, 9 beliebig verkippen und dadurch der einfallende Laserstrahl 2 zweidimensional ablenken.

Das Antriebselement 6, das einen translativen und einen rotativen Freiheitsgrad besitzt, kann in Wälz-, Luft- oder Magnetlagerungen gelagert sein. Als Dreh-Schub-Antrieb 7 kann beispielsweise ein tubularer Linearmotor in Kombination mit einem Torque-Motor mit unterschiedlich langen Primär- und Sekundärteilen eingesetzt werden. Diese beiden Motoren sind Drehstromsynchronmotoren und ermöglichen die stationäre Anordnung ihrer schweren kupfer- und eisenbehafteten Primärspulenteile. Die prinzip- und konstruktionsbedingten Vorteile dieser Ablenkvorrichtung 1 sind insbesondere:
- hochdynamischer Antrieb durch geringe bewegte Massen;
- gutes Leistungs /Bauraum-Verhältnis (hohe Kräfte auf kleinem Raum);
- Antrieb mit ortfester Energieversorgung und Wasserkühlung;
- stationäre Anordnung der Messköpfe;
- Verwendung weniger und einfacher Lager zwischen Antrieb und Ablenkspiegel;
- kompakter Aufbau.

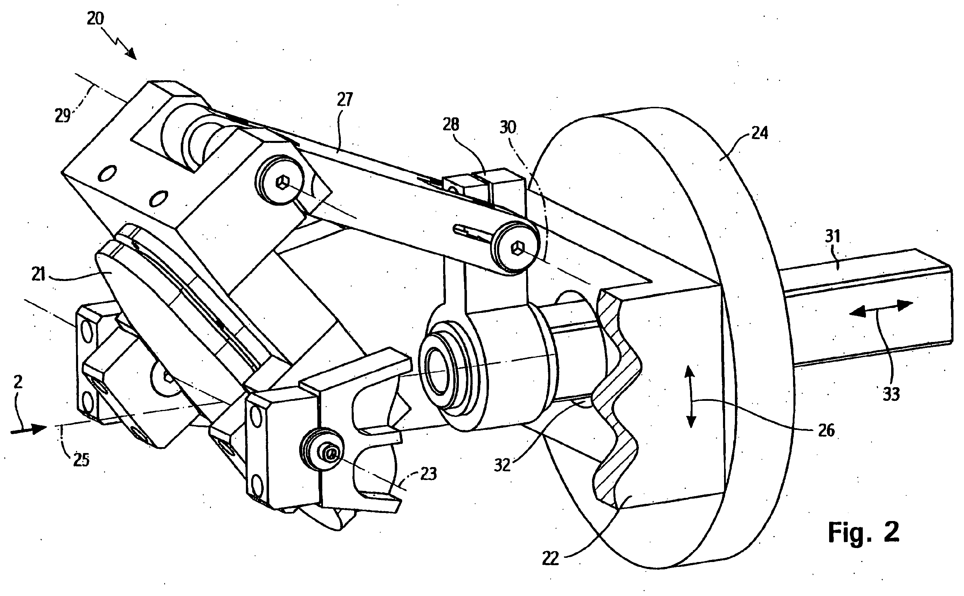

Bei der in **Fig. 2** gezeigten Ablenkvorrichtung **20** ist der Ablenkspiegel **21** ebenfalls in einer gabelförmigen Halterung **22** schwenkbar um eine in seiner Spiegelfläche liegende erste Schwenkachse **23** gelagert. Die Halterung 22 ist in einem Gehäuseflansch **24** schwenkbar um eine rechtwinklig zur ersten Schwenkachse 23 verlaufende, zweite Schwenkachse **25,** aber längs der zweiten Schwenkachse 25 unverschiebbar gelagert. Diese zweite Schwenkachse 25 verläuft kollinear zur optischen Achse des auf die Ablenkvorrichtung 20 einfallenden Laserstrahls 2. Das Verdrehen (Doppelpfeil 26) der Halterung 22 um die zweite Schwenkachse 25 erfolgt mittels eines Drehantriebs (nicht gezeigt), z.B. mittels eines Torque-Motors mit dem Prinzip eines Drehstromsynchronmotors. Der Ablenkspiegel 21 ist über einen Hebel **27** mit einem Verbindungselement **28,** das zwischen Ablenkspiegel 21 und Halterung 22 angeordnet ist, gelenkig verbunden. Der Hebel 27 ist rückseitig am Ablenkspiegel 21 und am Verbindungselement 28 um jeweils parallel zur ersten Schwenkachse 23 verlaufende Achsen **29, 30** drehbar gelagert. Das Antriebselement **31** eines Linearantriebs (nicht gezeigt) erstreckt sich durch eine zentrale Öffnung **32** der Halterung 22 bis zum Verbindungselement 28, das auf dem freien Ende des Antriebselements 31 drehbar, aber axial unverschiebbar gelagert ist. Im Unterschied zum Verbindungselement 12 der Ablenkvorrichtung 1 führt das Verbindungselement 28 eine Linear- und eine Rotationsbewegung aus.

Durch Verschwenken der Halterung 22 um die zweite Schwenkachse 25 wird der Ablenkspiegel 21 um die zweite Schwenkachse 25 mitgeschwenkt. Eine Linearbewegung des Antriebselements 31 längs der zweiten Schwenkachse 25 (Doppelpfeil 33) bewirkt, da die Halterung 22 unverschiebbar gelagert ist, eine Verschiebung des Verbindungselements 28 gegenüber der Halterung 22, wodurch der Ablenkspiegel 21 um die erste Schwenkachse 23 geschwenkt wird. Durch gleichzeitiges Verschwenken der Halterung 22 und Verschieben des Verbindungselements 28 lässt sich der Ablenkspiegel 21 um beide Schwenkachsen 23, 25 beliebig verkippen und dadurch der einfallende Laserstrahl 2 zweidimensional ablenken.

Wesentlicher Vorteile dieser Parallelkinematik ist die Möglichkeit, zwei konventionelle Direktantriebe mit konventionellen Messsystemen einsetzen zu können. Die Statoren mit Energie- und Kühlversorgung sowie die Messköpfe der Messsysteme mit Messsignalanschlüssen beider Antriebe können ortsfest angebracht werden. Die bewegten Massen reduzieren sich auf ein Minimum. Zusammen mit einer mechanisch steifen Konstruktion wird somit ein Maximum an Dynamik erreicht.

## Patentansprüche

1. Vorrichtung (1) zur Ablenkung eines Laserstrahls (2), mit einem Ablenkspiegel (3), der in einer Halterung (5) schwenkbar um eine in seiner Spiegelfläche liegende, erste Schwenkachse (4) gelagert ist, mit einem Drehantrieb zum Verschwenken der Halterung (5) um eine rechtwinklig zur ersten Schwenkachse (4) verlaufende, zweite Schwenkachse (9) und mit einer am Ablenkspiegel (3) angreifenden Einrichtung zum Verschwenken des Ablenkspiegels (3) um die erste Schwenkachse (4), wobei die Einrichtung ein drehbar um die zweite Schwenkachse (9) gelagertes Verbindungselement (12) und ein längs der zweiten Schwenkachse (9) verschiebbares Antriebselement (6) aufweist und wobei die Halterung (5) und das Verbindungselement (12) längs der zweiten Schwenkachse (9) relativ zueinander verschiebbar gelagert sind,
**dadurch gekennzeichnet,**
**dass** die Einrichtung einen Hebel (11) aufweist, der am Ablenkspiegel (3) und/am Verbindungselement (12) um jeweils parallel zur ersten Schwenkachse (4) verlaufende Achsen (14, 15) schwenkbar gelagert ist, und dass das Antriebselement (6) mit der Halterung (5) bewegungsgekoppelt ist.

2. Vorrichtung (20) zur Ablenkung eines Laserstrahls (2), mit einem Ablenkspiegel (21), der in einer Halterung (22) schwenkbar um eine in seiner Spiegelfläche liegende, erste Schwenkachse (23) gelagert ist, mit einem Drehantrieb zum Verschwenken der Halterung (22) um eine rechtwinklig zur ersten Schwenkachse (23) verlaufende, zweite Schwenkachse (25) und mit einer am Ablenkspiegel (21) angreifenden Einrichtung zum Verschwenken des Ablenkspiegels (21) um die erste Schwenkachse (23), wobei die Einrichtung ein drehbar um die zweite Schwenkachse (25) gelagertes Verbindungselement (28) und ein längs der zweiten Schwenkachse (25) verschiebbares Antriebselement (31) aufweist und wobei die Halterung (22) und das Verbindungselement (28) längs der zweiten Schwenkachse (25) relativ zueinander verschiebbar gelagert sind und das Antriebselement (31) mit dem Verbindungselement (28) bewegungsgekoppelt ist,
**dadurch gekennzeichnet,**
**dass** die Einrichtung einen Hebel (27) aufweist, der/am Ablenkspiegel (21) und am Verbindungselement (28) um jeweils parallel zur ersten Schwenkachse (23) verlaufende Achsen (29, 30) schwenkbar gelagert ist.

3. Vorrichtung nach Anspruch 1, **dadurch gekennzeichnet, dass** das Verbindungselement (12) unverschiebbar gelagert ist.

4. Vorrichtung nach Anspruch 3, **dadurch gekennzeichnet, dass** die Halterung (5) zwischen Ablenkspiegel (3) und Verbindungselement (12) angeordnet ist.

5. Vorrichtung nach Anspruch 4, **dadurch gekennzeichnet, dass** sich das Antriebselement (6) durch eine Öffnung (16) des Verbindungselements (12) hindurch bis zur Halterung (5) erstreckt.

6. Vorrichtung nach einem der Ansprüche 3 bis 5, **dadurch gekennzeichnet, dass** das Antriebselement (6) mit einem Dreh-Schub-Antrieb (7) zum Verdrehen und Verschieben der Halterung (5) verbunden ist.

7. Vorrichtung nach einem der Ansprüche 3 bis 6, **dadurch gekennzeichnet, dass** das Antriebselement (6) und das Verbindungselement (12) miteinander drehgekoppelt sind.

8. Vorrichtung nach Anspruch 2, **dadurch gekennzeichnet, dass** die Halterung (22) unverschiebbar gelagert ist.

9. Vorrichtung nach Anspruch 8, **dadurch gekennzeichnet, dass** das Verbindungselement (28) zwischen Ablenkspiegel (21) und Halterung (22) angeordnet ist.

10. Vorrichtung nach Anspruch 9, **dadurch gekennzeichnet, dass** sich das Antriebselement (31) durch eine Öffnung (32) der Halterung (22) bis zum Verbindungselement (28) erstreckt.

11. Vorrichtung nach einem der Ansprüche 8 bis 10, **dadurch gekennzeichnet, dass** das Verbindungselement (28) auf dem Antriebselement (31) drehbar, aber axial unverschiebbar gelagert ist.

12. Vorrichtung nach einem der Ansprüche 8 bis 11, **dadurch gekennzeichnet, dass** das Antriebselement (31) mit einem Linearantrieb zum Verschieben des Verbindungselements (28) verbunden ist.

13. Vorrichtung nach einem der Ansprüche 7 bis 12, **dadurch gekennzeichnet, dass** das Verbindungselement (28) und das Antriebselement (31) miteinander starr gekoppelt sind und das Antriebselement (31) relativ zum Abtrieb eines Linearantriebs drehbar, aber axial unverschiebbar ist.

14. Vorrichtung nach einem der Ansprüche 8 bis 13, **dadurch gekennzeichnet, dass** die Halterung (22) mit einem Drehantrieb verbunden ist.

15. Vorrichtung nach einem der Ansprüche 14, **dadurch gekennzeichnet, dass** das Antriebselement (31) und der Drehantrieb miteinander drehgekoppelt sind.

## Claims

1. Device (1) for deflecting a laser beam (2) comprising a deflecting mirror (3) disposed in a holder (5) such as to pivot about a first pivot axis (4) lying in its mirror surface, a rotary drive for pivoting the holder (5) about a second pivot axis (9) extending at a right angle to the first pivot axis (4), and a means which engages on the deflecting mirror (3) for pivoting the deflecting mirror (3) about the first pivot axis (4), wherein the means comprises a connecting element (12) disposed to rotate about the second pivot axis (9) and a drive element (6) which can be displaced along the second pivot axis (9) and wherein the holder (5) and the connecting element (12) are disposed such that they can be displaced relative to each other along the second pivot axis (9),
**characterized in**
**that** the means comprises a lever (11) disposed on the deflecting mirror (3) and on the coupling element (12) such as to pivot about axes (14, 15) each extending parallel to the first pivot axis (4), and that the drive element (6) is motionally coupled to the holder (5).

2. Device (20) for deflecting a laser beam (2) comprising a deflecting mirror (21) disposed in a holder (22) such as to pivot about a first pivot axis (23) lying in its mirror surface, a rotary drive for pivoting the holder (22) about a second pivot axis (25) extending at a right angle to the first pivot axis (23), and a means which engages on the deflecting mirror (21) for pivoting the deflecting mirror (21) about the first pivot axis (23), wherein the means comprises a connecting element (28) disposed to rotate about the second pivot axis (25), and a drive element (31) which can be displaced along the second pivot axis (25), and wherein the holder (22) and the connecting element (28) are disposed such that they can be displaced relative to each other along the second pivot axis (25) and the drive element (31) is motionally coupled to the connecting element (28),
**characterized in**
**that** the means comprises a lever (27) disposed on the deflecting mirror (21) and on the coupling element (28) such as to pivot about axes (29, 30) each extending parallel to the first pivot axis (23).

3. Device according to claim 1, **characterized in that** the connecting element (12) is disposed such that it cannot be displaced.

4. Device according to claim 3, **characterized in that** the holder (5) is disposed between the deflecting mirror (3) and the connecting element (12).

5. Device according to claim 4, **characterized in that** the drive element (6) extends through an opening (16) of the connecting element (12) to the holder (5).

6. Device according to any one of the claims 3 through 5, **characterized in that** the drive element (6) is connected to a rotary translatory drive (7) for rotating and displacing the holder (5).

7. Device according to any one of the claims 3 through 6, **characterized in that** the drive element (6) and the connecting element (12) are rotationally coupled to each other.

8. Device according to claim 2, **characterized in that** the holder (22) is disposed such that it cannot be displaced.

9. Device according to claim 8, **characterized in that** the connecting element (28) is disposed between the deflecting mirror (21) and the holder (22).

10. Device according to claim 9, **characterized in that** the drive element (31) extends through an opening (32) of the holder (22) to the connecting element (28).

11. Device according to any one of the claims 8 through 10, **characterized in that** the connecting element (28) is disposed on the drive element (31) such that it can be rotated but not be axially displaced.

12. Device according to any one of the claims 8 through 11, **characterized in that** the drive element (31) is connected to a linear drive for displacing the connecting element (28).

13. Device according to any one of the claims 7 through 12, **characterized in that** the connecting element (28) and the drive element (31) are rigidly coupled to each other and the drive element (31) can be rotated relative to the driven end of a linear drive but not be axially displaced.

14. Device according to any one of the claims 8 through 13, **characterized in that** the holder (22) is connected to a rotary drive.

15. Device according to claim 14, **characterized in that** the drive element (31) and the rotary drive are rotationally coupled to each other.

## Revendications

1. Dispositif (1) pour dévier un faisceau laser (2), avec un miroir de déviation (3) qui est monté pivotant dans un support (5) autour d'un premier axe de pivotement (4) situé dans sa surface réfléchissante, avec un dispositif d'entraînement en rotation pour basculer le support (5) autour d'un deuxième axe de pivotement (9) perpendiculaire au premier axe de pivotement (4) et avec un mécanisme appliqué au ou agissant sur le miroir de déviation (3) pour basculer le miroir de déviation (3) autour du premier axe de pivotement (4), le mécanisme présentant un élément de liaison (12) monté tournant autour du deuxième axe de pivotement (9) et un élément d'entraînement (6) déplaçable le long du deuxième axe de pivotement (9) et le support (5) et l'élément de liaison (12) étant montés déplaçables ou coulissables l'un par rapport à l'autre le long du deuxième axe de pivotement (9),
**caractérisé par le fait**
**que** le mécanisme présente un levier (11) qui est monté pivotant sur le miroir de déviation (3) et sur l'élément de liaison (12) autour d'axes (14, 15) parallèles au premier axe de pivotement (4)
et **que** l'élément d'entraînement (6) est couplé en déplacement avec le support (5).

2. Dispositif (20) pour dévier un faisceau laser (2), avec un miroir de déviation (21) qui est monté pivotant dans un support (22) autour d'un premier axe de pivotement (23) situé dans sa surface réfléchissante, avec un dispositif d'entraînement en rotation pour basculer le support (22) autour d'un deuxième axe de pivotement (25) perpendiculaire au premier axe de pivotement (23) et avec un mécanisme appliqué au ou agissant sur le miroir de déviation (21) pour basculer le miroir de déviation (21) autour du premier axe de pivotement (23), le mécanisme présentant un élément de liaison (28) monté tournant autour du deuxième axe de pivotement (25) et un élément d'entraînement (31) déplaçable le long du deuxième axe de pivotement (25) et le support (22) et l'élément de liaison (28) étant montés déplaçables l'un par rapport à l'autre le long du deuxième axe de pivotement (25) et l'élément d'entraînement (31) étant couplé en déplacement avec l'élément de liaison (28),
**caractérisé par le fait**
**que** le mécanisme présente un levier (27) qui est monté pivotant sur le miroir de déviation (21) et sur l'élément de liaison (28) autour d'axes (29, 30) parallèles au premier axe de pivotement (23).

3. Dispositif selon la revendication 1, **caractérisé par le fait que** l'élément de liaison (12) est monté de manière à ne pouvoir être déplacé ou coulissé.

4. Dispositif selon la revendication 3, **caractérisé par le fait que** le support (5) est disposé entre le miroir de déviation (3) et l'élément de liaison (12).

5. Dispositif selon la revendication 4, **caractérisé par le fait que** l'élément d'entraînement (6) s'étend jusqu'au support (5) à travers une ouverture (16) de l'élément de liaison (12).

6. Dispositif selon l'une des revendications 3 à 5, **caractérisé par le fait que** l'élément d'entraînement (6) est relié à un dispositif d'entraînement en rotation et par poussée (7) pour faire tourner et déplacer ou translater le support (5).

7. Dispositif selon l'une des revendications 3 à 6, **caractérisé par le fait que** l'élément d'entraînement (6) et l'élément de liaison (12) sont couplés en rotation.

8. Dispositif selon la revendication 2, **caractérisé par le fait que** le support (22) est monté de manière à ne pouvoir être déplacé ou coulissé.

9. Dispositif selon la revendication 8, **caractérisé par le fait que** l'élément de liaison (28) est disposé entre le miroir de déviation (21) et le support (22).

10. Dispositif selon la revendication 9, **caractérisé par le fait que** l'élément d'entraînement (31) s'étend jusqu'à l'élément de liaison (28) à travers une ouverture (32) du support (22).

11. Dispositif selon l'une des revendications 8 à 10, **caractérisé par le fait que** l'élément de liaison (28) est monté tournant sur l'élément d'entraînement (31), mais de manière à ne pouvoir être déplacé ou coulissé axialement.

12. Dispositif selon l'une des revendications 8 à 11, **caractérisé par le fait que** l'élément d'entraînement (31) est relié à un entraînement linéaire pour déplacer ou coulisser l'élément de liaison (28).

13. Dispositif selon l'une des revendications 7 à 12, **caractérisé par le fait que** l'élément de liaison (28) et l'élément d'entraînement (31) sont couplés rigidement et l'élément d'entraînement (31) est tournant par rapport à la sortie d'un entraînement linéaire, mais de manière à ne pouvoir être déplacé ou coulissé axialement.

14. Dispositif selon l'une des revendications 8 à 13, **caractérisé par le fait que** le support (22) est relié à un dispositif d'entraînement en rotation.

15. Dispositif selon l'une des revendications 8 à 14, **caractérisé par le fait que** l'élément d'entraînement (31) et le dispositif d'entraînement en rotation sont couplés en rotation.
